# EUROPÄISCHE PATENTSCHRIFT

(11) **EP 2 072 846 B1**
(45) Veröffentlichungstag und Bekanntmachung des Hinweises auf die Patenterteilung: **08.01.2014**
(21) Anmeldenummer: 08105708.5
(22) Anmeldetag: 30.10.2008
(51) Int. Cl.: F16C 35/02

(54) **Gehäuse mit einer Abtriebswelle und Verfahren zum Befestigen eines Mittels an einer Abtriebswelle**
Casing with a main shaft and method of fixing a means to a main shaft
Boîtier doté d'un arbre d'entraînement et procédé de fixation d'un moyen sur un arbre d'entraînement

(30) Priorität: 21.12.2007 DE 102007062168
(43) Veröffentlichungstag der Anmeldung: 24.06.2009
(73) Patentinhaber: ROBERT BOSCH GMBH, 70442 Stuttgart (DE)
(72) Erfinder: Holzer, Thomas, 74889 Sinsheim-Waldangelloch (DE); Saum, Andreas, 77815 Buehl (DE)

(56) Entgegenhaltungen:
- DE-A1- 10 149 089
- DE-A1-102004 009 717

## Beschreibung

Die Erfindung betrifft ein Gehäuse gemäß Patentanspruch 1 und ein Verfahren zum Befestigen eines Mittels an einer Abtriebswelle gemäß Patentanspruch 9.

### Stand der Technik

Elektromotoren weisen ein Gehäuse und eine Abtriebswelle auf, die über eine axiale Federsicherung, eine sogenannte Speed Nut, mit dem Gehäuse formschlüssig verbunden sind. Die Speed Nut stützt sich dabei auf eine Wirkfläche einer Exzenterbuchse, die die Stützkraft in das Gehäuse einleitet. Eine entsprechende Anordnung ist in DE 10 2004 009 717 A1 beschrieben, die die Merkmale des Oberbegriffs des Anspruchs 1 zeigt.

### Offenbarung der Erfindung

Die Aufgabe der Erfindung besteht darin, ein verbessertes Mittel zur axialen Sicherung der Abtriebswelle und ein verbessertes Verfahren zur Befestigung des Mittels an der Abtriebswelle bereitzustellen.

Die Aufgabe der Erfindung wird durch das Gehäuse für einen Elektromotor gemäß Patentanspruch 1 und durch das Verfahren zum Befestigen eines Mittels an der Abtriebswelle gemäß Patentanspruch 9 gelöst. Weitere vorteilhafte Ausführungsformen der Erfindung sind in den abhängigen Ansprüchen angegeben.

Ein Vorteil der erfindungsgemäßen Vorrichtung besteht darin, dass ein Einbringen von Rillen in die Abtriebswelle nicht erforderlich sind. Somit kann die Abtriebswelle einfacher hergestellt werden und zudem werden Vorbeschädigungen der Abtriebswelle durch einen scharfkantigen Federring (Speed Nut) bei der Montage verhindert. Des Weiteren bietet die Vorrichtung den Vorteil, dass die Abtriebswelle einfacher moniert werden kann und zudem eine definierte Position des Mittels ermöglicht.

Die Aufgabe der Erfindung wird dadurch gelöst, dass ein Mittel mit einer Öffnung verwendet wird, wobei die Abtriebswelle durch die Öffnung geführt ist und wobei das Mittel mit einer Presspassung auf der Abtriebswelle befestigt ist.

In einer weiteren Ausführungsform weist das Mittel die Form einer Platte oder einer Lochscheibe oder eines Ringes auf. Zudem ist in einer weiteren Ausführungsform die Platte thermisch auf die Abtriebswelle geschrumpft.

In einer weiteren Ausführungsform ist am gegenüber liegenden Ende der Abtriebswelle ein Zahnrad an der Abtriebswelle befestigt, und zudem ist zwischen dem Zahnrad und dem Gehäuse ein elastisches Abstandselement vorgesehen, das ein Spiel zwischen dem Gehäuse und dem Zahnrad vorgibt. Das elastische Abstandselement ist beispielsweise in Form einer Wellscheibe ausgebildet.

In einer weiteren Ausführungsform ist das Mittel mit einer Vorspannung gegen die Gehäusewand befestigt. Die Vorspannung liegt beispielsweise zwischen 1N und 70 N, insbesondere im Bereich um 50 N.

Eine einfache zuverlässige Befestigung des Mittels auf der Abtriebswelle wird dadurch erreicht, dass das Mittel, das eine Öffnung aufweist, über Raumtemperatur erwärmt wird, wobei sich die Öffnung aufweitet. Anschließend wird die Abtriebswelle in die Öffnung eingeschoben und das Mittel wird auf Raumtemperatur abgekühlt. Beim Abkühlen reduziert sich der Querschnitt der Öffnung, sodass eine Presspassung zwischen der Abtriebswelle und dem Mittel erreicht wird.

In einer weiteren Ausführungsform wird das Mittel auf eine Temperatur von 100 °C, insbesondere über 200 °C, erwärmt. Zudem wird in einer weiteren Ausführungsform das Mittel mit eine Vorspannung gegen eine Gehäusewand auf der Abtriebswelle befestigt. Dadurch wird eine sichere und zuverlässige Fixierung der Abtriebswelle in Bezug auf die Gehäusewand erreicht.

Die Erfindung wird anhand der Figuren näher erläutert.

Figur 1 zeigt einen Querschnitt durch eine Gehäusewand mit einer Abtriebswelle;

Figur 2 zeigt eine Platte; und

Figur 3 zeigt eine Ringscheibe.

Die Erfindung kann bei jeder Art von Gehäuse, insbesondere bei einem Gehäuse eines Elektromotors zur axialen Sicherung einer Welle, insbesondere einer Abtriebswelle eingesetzt werden. Die Anwendung der Erfindung ist jedoch nicht auf Elektromotoren begrenzt.

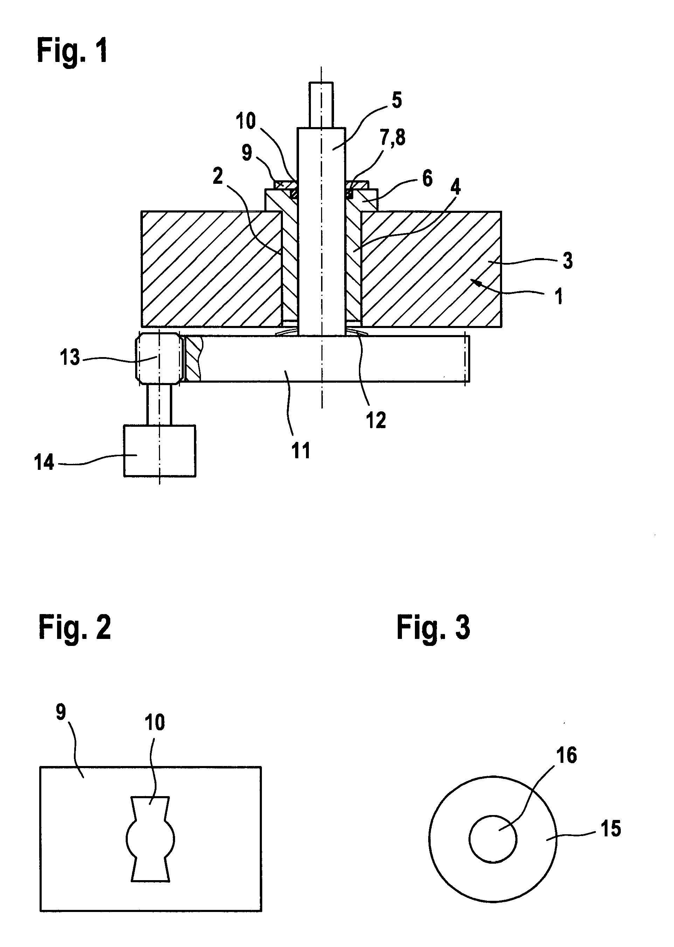

Figur 1 zeigt einen schematischen Teilausschnitt eines Gehäuses 1 mit einer Öffnung 2. Das Gehäuse kann ein Gehäuse eines Elektromotors, insbesondere ein Gehäuse eines Getriebes für einen Elektromotor darstellen. Von dem Gehäuse 1 ist nur ein Teil einer Gehäusewand 3 dargestellt. Durch die Gehäusewand 3 ist die Öffnung 2 geführt. In der Öffnung 2 ist eine Lagerhülse 4 eingebracht. Durch die Lagerhülse 4 ist eine Abtriebswelle 5 geführt. Die Abtriebswelle 5 ist in der Lagerhülse 4 drehbar gelagert, wobei eine Lagerpassung zwischen der Abtriebswelle 5 und der Lagerhülse ausgebildet ist. Die Lagerhülse 4 weist auf eine Außenseite eine Ringscheibe 6 auf. Die Lagerhülse 4 und die Ringscheibe 6 können auch einteilig ausgebildet sein. Die Lagerhülse 4 ist fest mit der Gehäusewand 3 verbunden. Die Ringscheibe 6 liegt auf der Außenseite der Gehäusewand 3 an. Die Abtriebswelle 4 ist auch durch die Ringscheibe 6 geführt. Angrenzend an das mittige Loch der Ringscheibe 6 ist an der Außenseite optional ein Dichtring 7 angeordnet, der in eine Ringnut 8 der Ringscheibe 6 eingelegt ist. Der Dichtring 7 kann als Wellendichtung, z. B. als O-Ring ausgebildet sein, der zwischen der Platte 9 und der Ringscheibe 6 verpresst ist und beispielsweise in einer Nut der Ringscheibe 6 angeordnet ist. Die Wellendichtung liegt auch an der Abtriebswelle 4 an.

Weiterhin in einem ersten Endbereich ist auf der Abtriebswelle 5 angrenzend an die Ringscheibe 6 als Mittel eine Platte 9 befestigt. Die Platte 9 weist eine zweite Öffnung 10 auf, durch die die Abtriebswelle 5 geführt ist. Die Platte 9 ist über eine Presspassung mit der Abtriebswelle 5 verbunden. Der erste Endbereich ist beispielsweise mit einem Scheibenwischer verbunden und die Abtriebswelle bewegt den Scheibenwischer.

An einem gegenüberliegenden Ende der Abtriebswelle 5 ist ein Zahnrad 11 an der Abtriebswelle 5 befestigt. Das Zahnrad 11 kann mit einer Schnecke 13 eines Elektromotors 14 verbunden sein. Der Elektromotor treibt die Abtriebswelle 5 an. Zwischen der Gehäusewand 3 und dem Zahnrad 11 ist ein elastisches Abstandselement 12 angeordnet. Das Abstandselement 12 kann in Form einer Wellscheibe, d. h. einer Federscheibe oder eines Federringes ausgebildet sein.

Die Platte 9 ist zur axialen Sicherung der Abtriebswelle 5 vorgesehen. Das Mittel kann auch anstelle der Form der Platte 9 beispielsweise in Form einer Kreislochscheibe oder eines Ringes ausgebildet sein. Die Presspassung zwischen der Abtriebswelle 5 und der Platte 9 kann auf verschiedene Arten hergestellt werden. Beispielsweise kann die Platte 9, die beispielsweise aus Metall, insbesondere aus C60 hergestellt ist, höher als die Raumtemperatur erwärmt werden. Gute Ergebnisse wurden mit Temperaturen zwischen 100 und 250° erreicht. Nach dem Erwärmen der Platte 9 wird die Abtriebswelle 5 durch die zweite Öffnung 10 der Platte 9 geschoben und anschließend wird die Platte 9 wieder auf Raumtemperatur abgekühlt. Anstelle der Erwärmung der Platte 9 kann auch die Abtriebswelle 5 abgekühlt werden, um den kreisförmigen Querschnitt der Abtriebswelle 5 zu reduzieren. Nach der Montage der Platte 9 auf der Abtriebswelle 5 wird die Abtriebswelle 5 wieder auf Raumtemperatur erwärmt. Bei der Montage wird das Zahnrad 11 abgestützt, um die Vorspannkraft auf die Platte 9 aufbringen zu können. Die Vorspannkraft der Platte 9 dient beispielsweise zum Vorspannen des elastischen Abstandselements 12, um ein definiertes Axialspiel einzustellen. Dabei kann die Platte 9 mit einer Vorspannung gegen die Ringscheibe 6 gedrückt werden. Die Vorspannung kann im Bereich zwischen 1 N und 70 N, insbesondere im Bereich von 50 N liegen.

Abhängig von dem Material der verwendeten Platte 9 kann die Platte 9 auch mit Hilfe eines induktiven Aufwärmverfahrens auf die gewünschte Temperatur gebracht werden. Beispielsweise kann die Platte 9 in Form einer Anlaufscheibe ausgebildet sein. Diese Art der Montage kann auch bei den anderen möglichen Formen des Mittels eingesetzt werden. Bei der Ausbildung der Anlaufscheibe kann auch eine Wellendichtung, z. B. ein O-Ring zwischen der Anlaufscheibe und der Ringscheibe 6 insbesondere in einer Nut der Ringscheibe 6 verpresst sein. Die Wellendichtung stellt den Dichtring 7 dar und liegt auch an der Abtriebswelle an.

Die zweite Öffnung 10 kann verschiedene Querschnitte aufweisen, insbesondere einen kreisförmigen Querschnitt aufweisen. Wesentlich ist nur, dass eine Presspassung zwischen der Platte 9 und der Abtriebswelle erreicht wird. Im einfachsten Fall kann die Platte 9 mit mindestens 2 Punkten, besser mit 3 Punkten an der Abtriebswelle anliegen. Eine bessere Verteilung der Presskraft wird erreicht, wenn die Platte 9 mit einer Ringfläche an der Abtriebswelle anliegt.

Die Abtriebswelle 5 weist im Bereich, in dem die Platte 9 auf der Abtriebswelle 5 angeordnet ist, die gleiche Oberflächenrauheit wie in benachbarten Bereichen auf. Es sind keine Rillen oder Nuten vorgesehen. In einem Ausführungsbeispiel weist die Platte oder Ringscheibe eine Innenfläche auf, die an der Abtriebswelle 5 anliegt. Die Innenfläche ist als glatte Zylinderinnenfläche ausgebildet. Somit wird die formschlüssige Verbindung zwischen der Abtriebswelle 5 und der Platte 9 oder der Ringscheibe durch die Schrumpfung der Platte 9 oder Ringscheibe erreicht, wobei die Anlageflächen der Abtriebswelle 5 und der Platte 9 bzw. der Ringscheibe, die aufeinander aufliegen, mindestens die Rauheit aufweisen, die benachbarte Flächenbereiche der Abtriebswelle 5 und der Platte 9 bzw. der Ringscheibe aufweisen.

Figur 2 zeigt eine Ausführungsform einer Platte 9 mit einer zweiten Öffnung 10 zur Aufnahme der Abtriebswelle 5.

Figur 3 zeigt eine Ausführungsform einer Ringscheibe 15 mit einer dritten Öffnung 16 zur Aufnahme der Abtriebswelle 5.

## Patentansprüche

1. Gehäuse (1) für einen Elektromotor (14), mit einer Abtriebswelle (5), die durch eine Öffnung (2) einer Gehäusewand des Gehäuses (1) geführt ist, wobei ein Mittel zum Begrenzen der axialen Verschiebbarkeit der Abtriebswelle (5) in Richtung auf das Gehäuse (1) vorgesehen ist, wobei das Mittel (9, 15) eine Öffnung (10, 16) aufweist, wobei die Abtriebswelle (5) durch die Öffnung (10, 16) geführt ist, wobei an einem zweiten Ende der Abtriebswelle (5) ein Zahnrad (11) an der Abtriebswelle (5) befestigt ist, **dadurch gekennzeichnet, dass** das Mittel (9, 15) mit einer Presspassung auf der Abtriebswelle (5) befestigt ist, wobei zwischen dem Zahnrad (11) und dem Gehäuse (1) ein elastisches Abstandselement (12) vorgesehen ist, das ein Spiel zwischen dem Gehäuse (1) und dem Zahnrad (11) vorgibt, wobei das Mittel mit einer Vorspannung gegen das Gehäuse (1) mit der Abtriebswelle (5) befestigt ist.

2. Gehäuse nach Anspruch 1, wobei das Mittel in Form einer Ringscheibe (15) ausgebildet ist.

3. Gehäuse nach einem der Ansprüche 1 oder 2, wobei das Mittel als Ring ausgebildet ist.

4. Gehäuse nach einem der Ansprüche 1 bis 3, wobei als Abstandselement (12) eine Wellscheibe angeordnet ist.

5. Gehäuse nach einem der Ansprüche 1 bis 4, wobei die Vorspannung einer Kraft zwischen 1 N und 70 N, insbesondere im Bereich um 50 N entspricht.

6. Gehäuse nach einem der Ansprüche 1 bis 5, wobei eine Wellendichtung zwischen dem Mittel (9, 15), und einer Lagerbuchse (4, 6) angrenzend an die Abtriebswelle angeordnet ist.

7. Verfahren zum Befestigen eines Mittels mit einer Öffnung auf einer Abtriebswelle für einen Elektromotor, wobei mithilfe eines Temperaturunterschieds zwischen der Abtriebswelle und dem Mittel der Querschnitt der Öffnung in Bezug auf den Querschnitt der Abtriebswelle vergrößert wird, wobei die Abtriebswelle teilweise durch die Öffnung geschoben wird, wobei der Temperaturunterschied wieder ausgeglichen wird und das Mittel über eine Presspassung an der Abtriebswelle befestigt ist, wobei das Mittel mit einer Vorspannung gegen die Gehäusewand auf der Abtriebswelle befestigt wird.

8. Verfahren nach Anspruch 7, wobei das Mittel auf über 100° Celsius, insbesondere über 200 ° Celsius erwärmt wird und nach dem Einschieben der Abtriebswelle wieder auf Raumtemperatur abgekühlt wird.

## Claims

1. Housing (1) for an electric motor (14), having an output shaft (5) which is guided through an opening (2) of a housing wall of the housing (1), a means being provided for limiting the axial displaceability of the output shaft (5) in the direction of the housing (1), the means (9, 15) having an opening (10, 16), the output shaft (5) being guided through the opening (10, 16), a gearwheel (11) being fastened to the output shaft (5) at a second end of the output shaft (5), **characterized in that** the means (9, 15) is fastened on the output shaft (5) with a press fit, an elastic spacer element (12) which defines a play between the housing (1) and the gearwheel (11) being provided between the gearwheel (11) and the housing (1), the means being fastened to the output shaft (5) with a prestress against the housing (1).

2. Housing according to Claim 1, the means being configured in the form of an annular disc (15).

3. Housing according to either of Claims 1 and 2, the means being configured as a ring.

4. Housing according to one of Claims 1 to 3, an undulating disc being arranged as spacer element (12).

5. Housing according to one of Claims 1 to 4, the prestress corresponding to a force between 1 N and 70 N, in particular in the region around 50 N.

6. Housing according to one of Claims 1 to 5, a shaft seal being arranged between the means (9, 15) and a bearing bush (4, 6), adjoining the output shaft.

7. Method for fastening a means having an opening on an output shaft for an electric motor, the cross section of the opening being enlarged in relation to the cross section of the output shaft with the aid of a temperature difference between the output shaft and the means, the output shaft being pushed partially through the opening, the temperature difference being equalized again and the means being fastened to the output shaft via a press fit, the means being fastened on the output shaft with a prestress against the housing wall.

8. Method according to Claim 7, the means being heated to over 100° Celsius, in particular over 200° Celsius, and being cooled to room temperature again after the output shaft has been pushed in.

## Revendications

1. Boîtier (1) pour un moteur électrique (14), comprenant un arbre de sortie (5) qui est guidé à travers une ouverture (2) d'une paroi du boîtier (1), un moyen de limitation de la mobilité axiale de l'arbre de sortie (5) dans la direction du boîtier (1) étant prévu, le moyen (9, 15) comprenant une ouverture (10, 16), l'arbre de sortie (5) étant guidé à travers l'ouverture (10, 16), une roue dentée (11) étant fixée à l'arbre de sortie (5) à une deuxième extrémité de l'arbre de sortie (5), **caractérisé en ce que** le moyen (9, 15) est fixé sur l'arbre de sortie (5) par un ajustement serré, un élément d'écartement (12) élastique étant prévu entre la roue dentée (11) et le boîtier (1), lequel élément d'écartement prédéfinit un jeu entre le boîtier (1) et la roue dentée (11), le moyen étant fixé à l'arbre de sortie (5) avec une précontrainte contre le boîtier (1).

2. Boîtier selon la revendication 1, dans lequel le moyen est réalisé sous la forme d'une rondelle annulaire (15).

3. Boîtier selon la revendication 1 ou 2, dans lequel le moyen est réalisé en tant qu'anneau.

4. Boîtier selon l'une quelconque des revendications 1 à 3, dans lequel une rondelle ondulée est prévue en tant qu'élément d'écartement (12).

5. Boîtier selon l'une quelconque des revendications 1 à 4, dans lequel la précontrainte correspond à une force entre 1 N et 70 N, en particulier aux alentours de 50 N.

6. Boîtier selon l'une quelconque des revendications 1 à 5, dans lequel un joint d'étanchéité d'arbre est disposé, de manière adjacente à l'arbre de sortie, entre le moyen (9, 15) et une douille de palier (4, 6).

7. Procédé de fixation d'un moyen comprenant une ouverture sur un arbre de sortie pour un moteur électrique, la section transversale de l'ouverture étant agrandie par rapport à la section transversale de l'arbre de sortie à l'aide d'une différence de température entre l'arbre de sortie et le moyen, l'arbre de sortie étant partiellement poussé à travers l'ouverture, la différence de température étant à nouveau égalisée et le moyen étant fixé sur l'arbre de sortie par le biais d'un ajustement serré, le moyen étant fixé sur l'arbre de sortie avec une précontrainte contre la paroi de boîtier.

8. Procédé selon la revendication 7, dans lequel le moyen est échauffé à plus de 100° Celsius, en particulier à plus de 200° Celsius, et est à nouveau refroidi jusqu'à la température ambiante après l'insertion de l'arbre de sortie.
